# EUROPEAN PATENT APPLICATION

(11) **EP 4 198 408 A1**
(43) Date of publication of application: **21.06.2023**
(21) Application number: 21215748.1
(22) Date of filing: 17.12.2021
(51) Int. Cl.: F24F 13/28, B01D 1/00, B01D 25/00, B01D 46/00

(54) **FILTER FRAME FOR AN AIR HANDLING UNIT**

(71) Applicant: Carrier Corporation, Palm Beach Gardens, FL 33418 (US)
(72) Inventor: Carton, Thomas Jean, 01350 Culoz (FR); Virot, Clément, 73100 Mouxy (FR); Drapier, Thierry, 01350 Culoz (FR)
(74) Representative: Dehns

(57) **Abstract**

A filter frame for an air handling unit, an air handling unit, and a method of assembling a filter frame for an air handling unit are described herein.

The filter frame (100) comprises a holder (110) defining a cavity configured to receive a plurality of filter cells (201, 202; 201, 202, 203), and a removable lid (120) configured to secure the plurality of filter cells (201, 202; 201, 202, 203) in the cavity. The removable lid (120) can also comprise a biasing element (130) configured to urge the plurality of filter cells (201, 202; 201, 202, 203) together within the cavity, to assist with securing the plurality of filter cells (201, 202; 201, 202, 203) in the cavity.

## Description

### Field

The present invention relates to a filter frame for an air handling unit, an air handling unit that comprises a filter frame, and a method of assembling a filter frame for an air handling unit.

### Background

Air handling units are devices used to condition and circulate air as part of a heating, ventilation and air conditioning (HVAC) systems and/or air purification systems used to move air between two environments in a controlled, or regulated, manner. For example, air handling units can be used to move air between indoor and outdoor areas to ventilate a building, and can further condition the ventilated air by heating or cooling the air as required to regulate an indoor environment. The air is often (and sometimes exclusively) filtered, or purified, as part of the air handling process.

When moving air between one environment to another, particularly from e.g. an outdoor environment to an indoor environment, it is desirous to filter the air to prevent the ingress of debris, particulates and other pollutants. Debris and particulates may aggregate in one or more components of the HVAC system over time and cause damage to or decrease an operational lifetime of such components. Particulates and pollutants can be harmful to occupants of the indoor environment, and accordingly it is desirous to filter out such particulates and pollutants from the air provided from the outdoor environment.

To filter debris, particulates and pollutants from outdoor environments, air handling units are provided with one or more filtering devices, such as filter cells. The one or more filtering devices are configured to prevent the ingress of targeted substances of varying size or composition. To accommodate the one or more filtering devices, a filter frame or filter housing is often provided. The filter frame is often configured to receive a plurality of filter cells, each filter cell generally configured to prevent the ingress of one or more of the targeted substances.

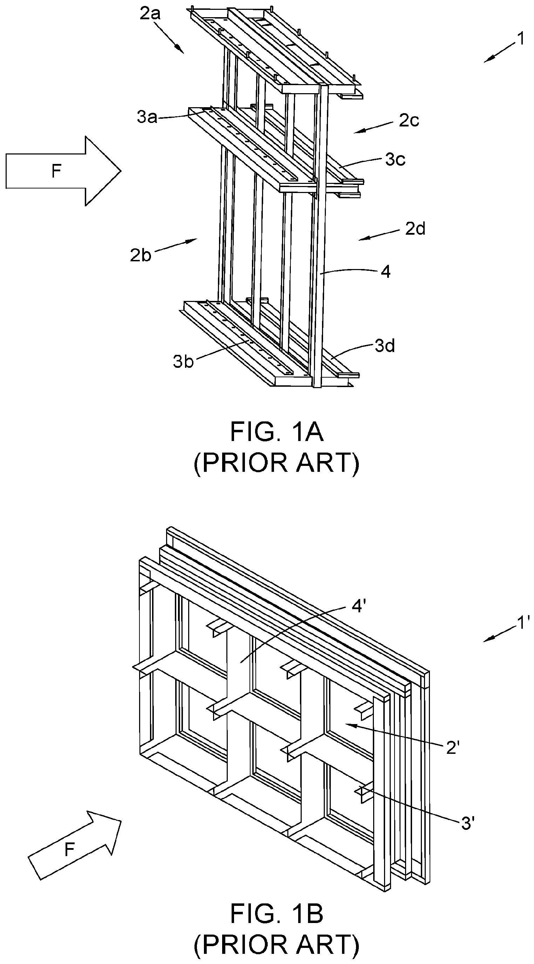

Figures 1A and 1B show examples of prior art filter frames 1, 1'. Filter frames may also be referred to as filter housings, and can be located within air units or as modular parts of air handling units. A direction of airflow F with respect to each prior art filter frame 1, 1' is also indicated. The direction of airflow is such that the air passes through a plurality of filter cells when flowing from one side of the filter frame 1, 1' to the other.

Figure 1A shows a perspective view of a first prior art filter frame 1 which comprises a plurality of cavities 2a, 2b, 2c, 2d, each configured to receive a filter cell (not shown). The filter cells are placed in the filter frame 1 by sliding the cells into a respective cavity 2a, 2b, 2c, 2d. The direction of sliding in the present instance is from a side of the filter frame 1 and perpendicular to the direction of airflow. A set of rails 3a, 3b, 3c, 3d secures each filter cell in the respective cavity 2a, 2b, 2c, 2d. In the present example the filter cells in cavities 2a, 2b are held loosely between the rail and a central support 4. The filter cells in cavities 2b, 2c, are held in place tightly. Rails 3c, 3d are slidably mounted to the filter frame 1 such that when a filter cell is received in each cavity 3c, 3d the filter cell can be tightly held in place by moving the rail 3c, 3d towards the central support 4 of the filter frame 1 and bolting it in place, such that the filter cell is clamped within the cavity 3c, 3d.

Figure 1B shows a perspective cross-sectional view of a second prior art filter frame 1' which again comprises a plurality of cavities 2'. Each cavity 2' receives a respective filter cell (not shown), the cavity 2' comprising an extension 3' at each corner to support the filter cell within the cavity 2'. The cavities 2' are spaced by a number of intermediate supports 4', which provide further support to the filter cells when located therein. The filter cells are inserted into the cavities 2' by sliding them in from a side of the filter frame 1', i.e. in a direction parallel to the direction of airflow. Depending on the required properties or function of the filter cell, the filter cell may be semi-permanently secured within the cavity 2', e.g. via bolts or screws.

It is desirable for a filter frame that allows a compact unit to be provided and/or which facilitates easy maintenance of filter cells.

### Summary

Viewed from a first aspect of the present invention there is provided a filter frame for an air handling unit, the filter frame comprising: a holder defining a cavity configured to receive a plurality of filter cells; and a removable lid configured to secure the plurality of filter cells in the cavity.

By providing a holder defining a cavity, i.e. a single cavity, which is configured to receive a plurality of filter cells, the filter frame can be made more compact. That is, the removal of a number of separating devices such as intermediate or central supports enables the filter frame to be made smaller, such that the filter frame can occupy a smaller space. This is particularly desirable where air handling units are required to be located indoors, or where space is limited, such that the dimensions of the air handling unit may be constrained.

The removal of any separating devices, or respective features configured to retain a single filter cell only, may also not be of detriment to the performance of the filter cells within the filter frame of the present aspect. The plurality of filter cells may still be secured within, e.g. securely held within, the cavity by the removable lid, such that air tightness between the plurality of filter cells and the filter frame can be maintained. The removable lid may be arranged to secure the filter cells within the cavity such that each filter cell contacts an adjacent filter cell. That is, the presence of air gaps between adjacent filter cells where air may pass untreated through the filter frame may be reduced or prevented altogether.

The filter frame may comprise a single cavity configured to receive the plurality of filter cells, rather than a plurality of cavities or other suitable receiving means each receiving a single filter cell. That is, the cavity may not comprise any separating devices which divide a single cavity into a plurality of sections, each section configured to receive a single filter cell; and/or may not comprise any retaining elements arranged to receive a single filter cell. That is, the holder may consist of a plurality of substantially smooth planar faces defining the cavity. It will therefore be appreciated that when a plurality of filter cells are received within the cavity of the filter frame of the present aspect, each filter cell will generally be in contact with one or more adjacent filter cells. The filter frame may be arranged so that when a plurality of filter cells are received within the cavity there are no parts of the filter frame and/or no other structural separation between the filter cells. The removable lid is configured to secure a plurality of filter cells in the cavity, rather than securing a single filter cell in place.

Filter cells are consumable parts which may deteriorate or degrade over time, and therefore may require replacement over the lifetime of the filter frame. The provision of a removable lid may improve ease of maintenance.

The holder may comprise a base and a pair of side walls. The pair of side walls may be opposite each other. The pair of side walls may generally extend perpendicular from opposite edges of the base. The base and the pair of side walls may define the cavity. The holder may comprise a U-shaped cross-section or U-shaped body, wherein the base of the holder defines a base of the U-shape and the pair of side walls define the arms of the U-shape. In this respect, the holder may be a U-shaped holder. The holder may further comprise a back wall extending from the base, the back wall located adjacent to and between the pair of side walls.

The removable lid may be arranged to provide a top surface of the cavity. The holder and removable lid together may define a frame which fully surrounds the filter cells when they are received within the cavity and the removable lid is mounted thereto. The holder and removable lid may enclose the filter cells within the cavity.

The base of the holder may comprise a first central opening.

The removable lid may comprise a generally planar body. The planar body may comprise a second central opening. The second central opening may be bounded by a periphery of the removable lid.

The filter frame may comprise a plurality of filter cells located in the cavity of the filter frame.

Each filter cell may comprise a filter cell frame and a filtering material bounded by the filter cell frame. The filter cell frame may be regarded as a filter cell structure. The filter cell frame may be configured to define an air passageway through the filter cell, the filtering material extending across the air passageway.

The plurality of filter cells may be configured to contact, or abut, an adjacent filter cell within the cavity. That is, the plurality of filter cells are uninterrupted, or unimpeded, by any separating devices or respective retention devices when mounted in the filter frame. As such, the plurality of filter cells may be held together such that they contact one another. The filter frame housing the filter cells may be more compact as a result.

Each filter cell may be configured to contact the adjacent filter cell at the filter cell frame. The filter cell frames of adjacent filter cells may be configured to produce a seal when held in contact with one another. The plurality of filter cells may thus define a single air passageway therethrough when received in the cavity, the single air passageway defined by the filter cell frames of each filter cell.

The opening of the holder may be configured to define an air inlet or an air outlet, and the opening of the removable lid may be configured to define the other of the air outlet or air inlet. For example, the opening of the holder (e.g. at the base of the filter frame) may define an air inlet and the opening of the lid (e.g. at the top of the filter frame) may define an air outlet.

The plane of the air inlet may be parallel to the plane of the air outlet.

When the plurality of filter cells are received within the cavity and secured by the removable lid, an air passageway may be defined between the air inlet and the air outlet, the air passageway extending through the plurality of filter cells.

In normal use, a direction of airflow through the air passageway, at least as partially defined by the plurality of filter cells, may preferably be in a vertical direction. The base of the holder may be located at a downwards end of the filter frame, and the removable lid may be located at an upwards end of the filter frame.

In normal use, the plurality of filter cells may be stacked within the cavity in the vertical direction, e.g. stacked in the direction of gravity. That is, an air passageway as defined by each filter cell may be oriented in the vertical direction. Accordingly, when received in the cavity, the plurality of filter cells may be held together at least partially by gravity. When the removable lid is mounted on the filter frame the filter cells may be urged together within the cavity and securely held within. This may ensure that there is a reliable seal between adjacent filter cells and/or result in the filter cells being held securely to reduce noise, e.g. rattling.

The plurality of filter cells may comprise at least two different types of filters. For example, the plurality of filter cells may comprise two or more of a coarse filter, a HEPA filter. and/or a carbon filter. The coarse filter may be located upstream of the HEPA filter. The HEPA filter may be located upstream of the carbon filter. The coarse filter may be located adjacent to the air inlet. The HEPA filter or the carbon filter may be located adjacent to the air outlet.

The filter frame may comprise a biasing element configured to urge the plurality of filter cells together within the cavity.

By urging the plurality of filter cells together within the cavity, the filter cells may be secured tightly within the cavity. The plurality of filter cells, due to the urging force provided by the biasing element, may be pressed against one another such that adjacent filter cells within the plurality of filter cells are more effectively sealed against one another. The provision of a biasing element may hence improve airtightness of an air passageway through the filter frame.

The provision of a biasing element may also reduce movement of the filter cells in use. This may for example reduce noise. For example, during normal use airflow through the filter frame may otherwise rattle or disturb the positioning of each of the filter cells in the cavity. The urging force provided by the biasing element may mitigate or prevent any movement of the plurality of filter cells within the cavity due to air pressures and/or airflow through the filter frame.

The biasing element may comprise a resiliently biased spring element. The resiliently biased spring element may be configured to deform when the plurality of filter cells are secured against the resiliently biased spring element. Deformation of the resiliently biased spring element may generate a spring force, wherein the spring force is configured to urge the plurality of filter cells together within the cavity.

Securing the plurality of filter cells against the biasing element may provide a tension force between the filter frame and the filter cells which urges the plurality of filter cells together within the cavity.

In one arrangement, the biasing element may be located at a base of the holder. The removable lid may be configured to secure the plurality of filter cells against the biasing element.

In an alternative arrangement, the removable lid may comprise the biasing element.

The biasing element may contact a surface of a filter cell adjacent to the removable lid, and thus the biasing element may be generally located on an underside of the removable lid.

Due to contact between the biasing element and the surface of the filter cell, the biasing element may urge the plurality of filter cells together within the cavity. That is, a tension force is present between the removable lid and the plurality of filter cells owing to the contact between the biasing element and the surface of the filter cell. In other words, the filter cells are urged away from the removable lid, e.g. towards the bottom of the cavity and/or a base of the holder. The contact between the biasing element and the removable lid may also provide a frictional force which further secures the plurality of filter cells within the cavity.

The filter frame may be arranged to allow the filter cells to be changed without the need for tools.

The use of a biasing element, rather than e.g. a clamping element or other element which comprises the use of securing or fastening means such as screws, bolts or the like to secure the plurality of filter cells, may improve accessibility to the filter frames. Filter cells are consumable parts which may deteriorate or degrade over time, and therefore may require replacement over the lifetime of the filter frame. The provision of a biasing element may improve ease of maintenance. This may be because the lid may be removed without the need to unfasten or unsecure any elements used to securely hold the plurality of filter cells within the cavity.

The biasing element may urge the plurality of filter cells together within the cavity in a direction which is parallel to a direction of airflow through the plurality of filter cells. Preferably, the urging force provided by the biasing element may be in an opposite direction to the airflow through the plurality of filter cells. In this case the biasing element may therefore counteract an air pressure which may otherwise urge the plurality of filter cells against the removable lid. This could otherwise disturb an airtightness of the plurality of filter cells within the filter frame.

In one embodiment the biasing element comprises a resiliently biased spring member.

The resiliently biased spring member generally has a deformed position and a nondeformed position, wherein the resiliently biased spring member is configured to be in the deformed position when in contact with a surface of a filter cell adjacent to the removable lid, and wherein the resiliently biased spring member is configured to provide a spring force urging the plurality of filter cells into the cavity when in the deformed position.

The resiliently biased spring member may comprise a spring portion. The spring portion may be arranged to contact the surface of the filter cell adjacent to the removable lid, such that the resiliently biased spring member is held in the deformed position. The spring portion may be located at a free end of the resiliently biased spring member.

The spring portion may be configured to guide the resiliently biased spring member into engagement with the plurality of filter cells. The spring portion may comprise a shape configured to provide a gradual contact between the resiliently biased spring member and the plurality of filter cells. The spring portion may comprise a curved/rounded/chamfered profile. As such, the resiliently biased spring member may be configured to first contact the plurality of filter cells at a curved/rounded/chamfered surface, rather than an edge of the resiliently biased spring member. That is, the spring portion may be configured to provide a smooth contact between the plurality of filter cells and the resiliently biased spring member. The shape of the spring portion may thus provide an angle between the plurality of filter cells and the resiliently biased spring member such that a normal component of a contact force between them, normal to either surface, is reduced.

As the lid is inserted into the holder the spring portion of the resiliently biased spring member may contact the uppermost filter cell and urge it into a downwards direction into the cavity. The spring portion may facilitate insertion of the removable lid into the holder, and may also prevent possible damage to the plurality of filter cells where the biasing element contacts the plurality of filter cells, e.g. the upper surface of the adjacent filter cell.

The resiliently biased spring member may comprise a fastening portion. The fastening portion may be configured to receive a fastening element to secure the resiliently biased spring member to the filter frame, e.g. the lid.

The resiliently biased spring member may be a C-shaped spring. The C-shaped spring may comprise a fastening portion configured to fasten the C-shaped spring to the removable lid. The spring portion may be located at a free end of the C-shaped spring. The fastening portion may be generally located at a fixed end of the C-shaped spring.

In an alternative embodiment, the biasing element comprises a protrusion. The protrusion may be configured to contact the plurality of filter cells when the removable lid is received by the holder. The protrusion may extend from the underside of the removable lid.

The protrusion may be configured to provide a contact force, or a tension force, between the protrusion and the surface of the filter cell, i.e. urge the filter cell in a direction away from the biasing element. The protrusion may be configured to urge the plurality of filter cells away from the removable lid, e.g. towards the bottom of the cavity and/or a base of the holder, and hence the filter cells together within the cavity; and may also provide a frictional force which further secures the plurality of filter cells within the cavity.

The removable lid may comprise a plurality of biasing elements. The plurality of biasing elements may comprise a plurality of resiliently biased spring members and/or a plurality of protrusions. Alternatively, the plurality of biasing elements may comprise at least one resiliently biased spring member and at least one protrusion.

The plurality of biasing elements may be evenly distributed around the removable lid. Evenly distributing the plurality of biasing elements may result in an even distribution of force urging the plurality of filter cells together within the cavity, such that the plurality of filter cells are urged in a direction parallel to a direction of airflow through the plurality of filter cells. This may improve air tightness within the filter frame.

The plurality of biasing elements are preferably distributed around a periphery of the removable lid. For example, four biasing elements may be provided, with each biasing element located in or towards a respective corner of the periphery of the removable lid. Alternatively, the plurality of biasing elements may be provided each along a respective side of the periphery of the removable lid. In further examples, biasing elements may be provided in each respective corner of the periphery of the removable lid, and along each side of the periphery of the removable lid.

The plurality of biasing elements may be configured to contact the filter cell frame of the adjacent filter cell. Contacting the filter cell frame of the adjacent filter cell, rather than e.g. a filtering medium of the filter cell, may prevent damage to the filter cell. Additionally, providing the plurality of biasing elements around the periphery of the removable lid may prevent the biasing elements impeding airflow through the filter frame, e.g. via impeding airflow at the air inlet/outlet located at the removable lid.

The biasing element may be formed integrally with the holder and/or the removable lid. For example, where the biasing element is a resiliently biased spring member located at the removable lid, the resiliently biased spring member may be machined from the material of the removable lid, e.g. by laser cutting. The integral resiliently biased spring member may comprise a hinged portion integral with the removable lid. The integral resiliently biased spring member may depend from an underside of the removable lid at the hinged portion.

In another example, where the biasing element is a protrusion located at the removable lid, the protrusion may be formed by punching and/or stamping the removable lid. Accordingly the protrusion may appear as an indentation from an upper surface of the removable lid.

In another example, where the biasing element is located at the holder, the biasing element may be similarly formed integrally with the holder via any suitable machining process. Where the biasing element is a resiliently biased spring member for example, the resiliently biased spring member may be machined from the material of the base of the holder. The integral resiliently biased spring member may comprise a hinged portion integral with the base of the holder. The integral resiliently biased spring member may extend from a surface of the base defining the cavity at the hinged portion.

The removable lid may be configured to be slidably received by the holder. An interference fit between the removable lid and the holder may retain the removable lid in place within the holder.

Slidably receiving the holder may help make a footprint of the filter frame more compact, as the removable lid may be inserted and removed from the holder via movement in a single plane. Space to allow the insertion and removal of the holder within two planes is hence unnecessary. Accordingly the filter frame may be provided in more compact spaces.

The holder may comprise a first pair of rails, and the removable lid may comprise a second pair of rails, such that the holder is configured to receive the removable lid by sliding engagement between the first pair of rails and the second pair of rails.

The first pair of rails and the second pair of rails may be complementary to one another. Complementary engagement of the first pair of rails and the second pair of rails may enable efficient insertion and removal of the removable lid to and from the holder without the need for tools. Further, the complementary engagement of the first pair of rails and the second pair of rails may secure the removable lid in the holder such that fastening elements such as bolts, screws, clips and the like are not needed to secure the removable lid in place. Accordingly maintenance and ease of access to the cavity may be improved.

The first pair of rails may be located towards an upper end of the holder, and may be located on each of the pair of side walls of the holder.

The first pair of rails may comprise a pair of grooves. The grooves may be configured to prevent the removable lid from moving upwards when received by the holder. The pair of grooves may be overturned U-shaped grooves. The grooves may be formed by bending an uppermost edge of each of the pair of side walls back on itself.

The second pair of rails may be located on a pair of side edges of the removable lid. The second pair of rails may comprise a pair of protrusions. The protrusions may be formed by folding side edges of the removable lid perpendicular to the plane of the perpendicular lid. In alternative arrangements the protrusions may extend in a plane of the removable lid.

The first set of rails may be configured to retain the second set of rails in place by an interference fit. The interference fit may provide a contact force by which the removable lid can be held in tension with the plurality of filter cells. Thus the interference fit may provide a surface by which the biasing elements can urge the plurality of filter cells within the cavity.

In an alternative arrangement, the removable lid may be configured to attach to the holder by a hinged joint. The hinged joint may be located at a back wall of the holder. One or more clips may be located to maintain the removable lid in a closed position when the plurality of filter cells are received within the cavity. The clips may be located partially on each of the removable lid and the side walls of the holder. Preferably, the clips are spring-loaded hand-releasable fastenings.

The holder may be configured to receive the removable lid at a plurality of positions. A volume of the cavity may be defined by the position in which the removable lid is received. That is, as the size of the cavity is defined by the holder and the lid, the position at which the removable lid is received defines the volume of the cavity accordingly. This may allow the cavity to house a different number, different sizes and/or different types of filter cells. Compatibility of the filter frame may be improved by being able to change the volume of the cavity, and further the filter frame may be suitable for use in a greater range of situations when the cavity may be sized so as to receive a desired set of filter cells.

The lid may be receivable at a number of discrete positions within the holder. Alternatively, the filter frame and/or the holder may be adjustable to allow the lid to be received at a number or continuum of different positions within a range of positions.

The removable lid may be configured to be received at a first position, wherein the cavity has a first volume in the first position. The removable lid may be configured to be received at a second position, wherein the cavity has a second volume in the second position. The second volume may be greater than the first volume. The first volume may be configured to receive at least two filter cells (e.g. a coarse filter and a HEPA filter), and the second volume may be configured to receive at least three filter cells (e.g. a coarse filter, a HEPA filter and a carbon filter).

A height of the holder for mounting the lid (e.g. the rails) relative to the base of the holder may be adjustable from a first height to a second height. The cavity may have the first volume when the part of the holder for mounting the lid is at the first height, and the cavity may have the second volume when the part of the holder for mounting the lid is at the second height.

The first pair of rails may be located towards an upper edge on each of the pair of side walls. The first pair of rails may be adjustable from the first height to the second height. Adjusting the height of the first pair of rails hence adjusts the position at which the removable lid is slidably received by the holder.

Alternatively, the hinged connection may be located towards an upper edge of the back wall. Accordingly, the hinged connection may be adjustable from the first height to the second height. Adjusting the height of the hinged connection hence adjusts the position at which the removable lid is fastened to the holder with respect to a base of the holder.

The holder may comprise a first portion and a second portion. The first portion may be nested with the first portion. The second portion may be configured to telescopically extend with respect to the first portion. Accordingly movement of the second portion relative to the first portion may be configured to adjust a height of the holder.

The second portion may comprise hooked grooves configured to retain the first portion. The hooked grooves of the second portion may be located on a side wall of the second portion, and may be configured to receive the side walls of the first portion. The second portion may be configured to slide relative to the first portion, and the hooked grooves may retain a concentricity of the second portion with respect to the first portion. The first portion and the second portion may be regarded as moving in a railed engagement with one another.

The first portion may be configured to engage the second portion such that the holder may be releasably secured at a selected height.

In one example, each of the first portion and the second portion may comprise a plurality of fastening holes. The second portion may be telescopically extended, or positioned, relative to the first portion so as to align respective fastening holes. The aligned fastening holes may be configured to receive a fastening element, such as a threaded screw, bolt or the like, such that the second portion may be releasably secured to the first portion at a selected position. The plurality of fastening holes may be a plurality of discrete fastening holes, or may instead be a plurality of elongate grooves (i.e. extended hole) over which a continuum of positions may be selected within a range.

In another example, the first portion may comprise a raised groove. The raised groove may be configured to protrude outwardly from the walls of the first portion. The second portion may comprise a plurality of troughed grooves, the troughed grooves being sized so as to receive the raised groove. By telescopically extending, or positioning, the second portion with respect to the first portion, the raised groove may be aligned with one of the troughed grooves. An interference fit between the raised groove and a selected troughed groove may releasably secure the second portion to the first portion at the selected position.

In a further example, the first portion may comprise a plurality of hooks and the second portion may comprise a plurality of slots. Each of the plurality of hooks and each of the plurality of slots may be spaced equidistant with respect to one another. The plurality of hooks may be configured to engage the plurality of slots. The second portion may be positioned relative to the first portion, and a first set of the plurality of hooks of the first portion may be configured to engage a respective set of the plurality of slots, such that the relative position of the second portion to the first portion may be releasably secured.

By providing a holder which is adjustable to allow the lid to be received/mounted at a plurality of different positions, the filter frame may remain compact as only a single point at which the removable lid is received by the holder needs be provided. The positioning of the point at which the removable lid is received can then be adjusted, rather than providing a plurality of redundant points at which the removable lid may be received. Further, such an arrangement enables a single filter frame to be adjusted to hold a desired number of filter cells, which may increase the functionality and/or compatibility of the filter frame with various air handling units and/or air treatment systems.

The filter frame comprising a plurality of filter cells may be regarded as a filter unit. Defined in another way, the filter frame may comprise the holder and the removable lid. The filter frame may be in combination with a plurality of filter cells, the combination of which may be regarded as a filter unit. In other embodiments, the filter frame may consist of the holder and the removable lid, and the filter frame in combination with a plurality of filter cells may be regarded as a filter unit. The filter frame may not comprise any part or structure that sits between adjacent filter cells housed within the filter frame.

Viewed from a second aspect of the present invention there is provided a filter unit for an air handling unit, the filter unit comprising: a filter frame according to the first aspect and a plurality of filter cells located in the cavity of the filter frame.

The filter frame according to the first aspect comprising the plurality of filter cells located in the cavity of the filter frame may be regarded as a filter unit according to the second aspect.

The filter unit of the second aspect of the invention may have one or more features corresponding to those of the filter frame of the first aspect of the invention. Thus the above-description of the filter frame of the first aspect, including but not limited to all technical advantages and alternative embodiments, may be equally applicable to the filter unit of the second aspect.

Viewed from a third aspect of the present invention, there is provided an air handling unit, the air handling unit comprising: a filter frame according to the first aspect comprising a plurality of filter cells located in the cavity of the filter frame; and an air pump in flow communication with the filter unit for pumping air through the plurality of filter cells.

The pump may be located downstream of the filter unit. The pump may be connected to the air outlet of the filter frame. The pump may be configured to motivate air through the filter frame.

The air handling unit may be suitable for a HVAC system. The air handling unit may additionally or alternatively be suitable for an air purification/treatment/scrubber system.

The air handling unit may comprise a housing. The filter frame may be configured to be received within the housing. The pump may also be received within the housing.

The air handling unit of the third aspect of the invention may have one or more features corresponding to those of the filter frame of the first aspect and/or the filter unit of the second aspect of the invention. Thus the above-description of the filter frame of the first aspect, and the above description of the filter unit of the second aspect, including but not limited to all technical advantages and alternative embodiments, may be equally applicable to the air handling unit of the third aspect.

Viewed from a fourth aspect of the present invention there is provided a method of assembling a filter frame for an air handling unit, the method comprising: providing a filter frame according to the first aspect; providing a plurality of filter cells; inserting the plurality of filter cells into the cavity; and mounting the removable lid to the holder, such that the plurality of filter cells are held securely within the cavity.

The step of mounting the removable lid may comprise: sliding the removable lid into the holder; and urging the plurality of filter cells together within the cavity using one or more biasing elements of the filter frame.

The step of inserting the plurality of filter cells into the cavity may comprise stacking the plurality of filter cells within the cavity, wherein each of the plurality of filter cells are provided in contact with one or more adjacent filter cells.

The method may comprise adjusting a height of the lid relative to the base of the holder according to the number, type and/or size of filter cells provided.

The method may comprise adjusting a height of part of the holder according to the number, type and/or size of filter cells provided.

Adjusting a height of part of the holder may comprise telescopically extending a second portion of the holder relative to a first portion of the holder, and may further comprise fastening the second portion in the extended position relative to the first portion.

The method of the fourth aspect of the invention comprises providing a filter frame as recited herein with reference to the first aspect of the invention. The method of the fourth aspect may thus have one or more features corresponding to those of the filter frame of the first aspect of the invention. Thus the above description of the filter frame of the first aspect, including but not limited to all technical advantages and alternative embodiments, may be equally applicable to the method of the fourth aspect.

### Brief description of the drawings

Certain exemplary embodiments of the invention are described below by way of example only and with reference to the accompanying drawings in which:
Figure 1A shows a perspective view of a first prior art filter frame;
Figure 1B shows a perspective view of a second prior art filter frame;
Figure 2A shows a perspective view of a filter frame;
Figure 2B shows a perspective view of a filter frame where a lid of the filter frame is partially removed;
Figure 3 shows a schematic representation of an exemplary filter cell;
Figure 4 shows a cross-sectional side view of a filter frame;
Figure 5 shows a side view and a plan view of a resiliently biased spring member;
Figure 6 shows a perspective view of a filter frame housed in an air handling unit; and
Figure 7 shows a schematic representation of a filter frame housed in an air handling unit.

### Description of the preferred embodiment

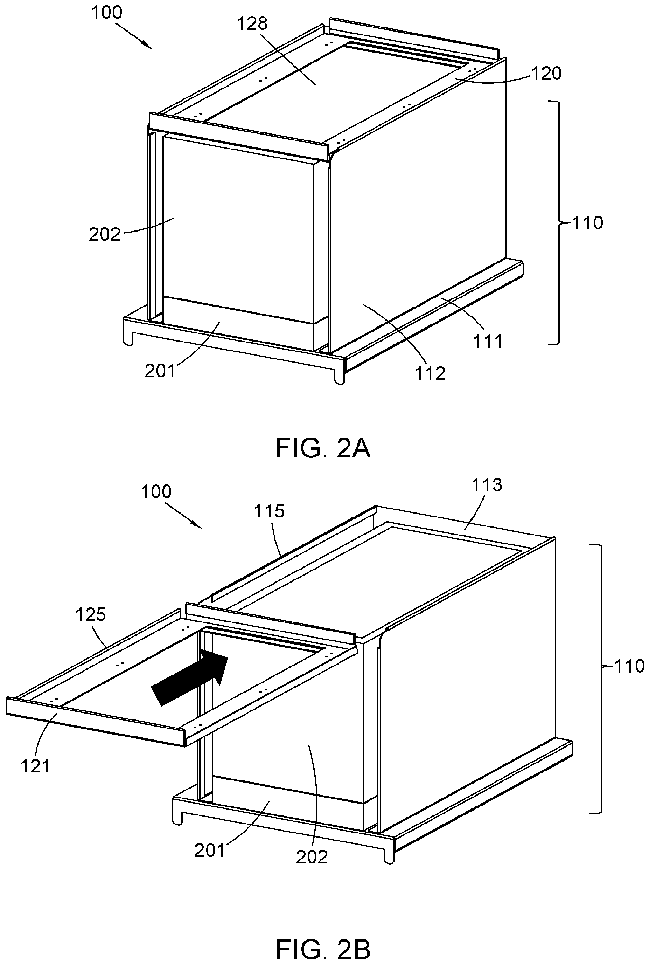

Figure 2A and 2B each show a perspective view of a filter frame 100. The filter frame 100 comprises a holder 110 which defines a cavity. The cavity is sized so as to receive a plurality of filter cells 201, 202. The holder 110 also receives a removable lid 120, which secures the plurality of filter cells 201, 202 in the cavity.

The holder 110 comprises a base 111, a pair of side walls 112 and a back wall 113. The base 111 comprises an opening defining an air inlet (not shown). A front opening is defined between the base 111 and the pair of side walls 112, i.e. opposite the back wall 113. A top opening is defined between the pair of side walls 112 and the back wall 113, i.e. opposite the base 111. As illustrated in figures 2A and 2B, the base 111 is wider than the side walls 112. The portion of the base 111 extending past the side walls 112 may facilitate placement of the filter frame 100 within an air handling unit 300.

The removable lid 120 is a generally planar structure comprising a central opening 128, the opening 128 defining an air outlet. The opening 128 is bounded by a periphery of the removable lid 120.

The removable lid 120 and the holder 110 are arranged such that the removable lid 120 is received by the holder 110 at the top opening. When the removable lid 120 is received by the holder 110, as shown in figure 2A, the plurality of filter cells 201, 202 are secured in the cavity. The plurality of filter cells 201, 202 are aligned with the air inlet of the holder 110 and the air outlet of the removable lid 120, such that the filter frame 100 defines an air passageway therethrough.

The plurality of filter cells 201, 202 are inserted into the cavity defined by the holder 110 either by sliding the filter cells 201, 202 into the cavity defined by the holder 110 in a direction as indicated by the arrow in figure 2B (i.e. via the front opening of the holder 110); or by placing the filter cells 201, 202 into the cavity from above (i.e. via the top opening of the holder 110).

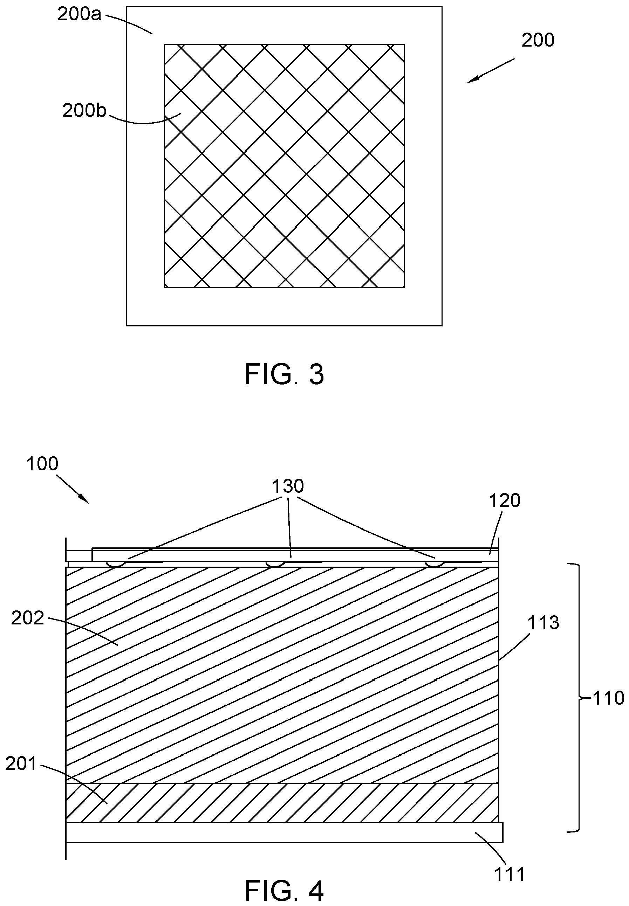

Figure 3 shows a schematic representation of an exemplary filter cell 200. The filter cell 200 comprises a filter cell frame 200a which surrounds a filtering medium 200b, and at least partially defines a boundary, or walls of, the air passageway. The filtering material 200b extends across the air passageway such that all the air passes through the filtering material 200b. As air passes through the filtering material 200b, one or more targeted substances are trapped or absorbed.

It is preferable to prevent the ingress of objects, debris or targeted substances of greater diameter or size at an upstream location of the air passageway (i.e. towards the air inlet), with targeted substances of diminishing size progressively filtered out as the untreated air flows towards the air outlet through the air passageway. Thus in the present embodiment, the first filter cell 201 is a coarse filter, where the filtering medium 201b is chosen to prevent the ingress of larger targeted substances and/or debris. The second filter cell 202, located downstream of the coarse filter 201, is a HEPA filter, where the filtering medium 202b comprises a pleated structure arranged to absorb particulates. In various embodiments, a carbon filter 203 can be provided downstream of the HEPA filter 202, where the filtering medium 203b of the carbon filter 203 is arranged to absorb odours or other targeted gases.

When the removable lid 120 is received by the holder 110 as shown in figure 2A, the removable lid 120 contacts an upper surface of the filter cell 202 in the cavity and adjacent to the removable lid 120. That is, an underside of the periphery of the removable lid 120 contacts an upper surface of the filter cell frame 202a of the filter cell 202 located adjacent to the removable lid 120. The removable lid 120 therefore secures the plurality of filter cells 201, 202 in place as they are bounded by the removable lid 120, and restrained via frictional forces between the removable lid 120 and the upper surface of the adjacent filter cell 202. Accordingly removal or slippage of the plurality of filter cells 201, 202 via the front opening or the top opening of the holder 110 is restricted when the removable lid 120 is in place.

The holder 110 comprises a first set of rails 115 and the removable lid 120 comprises a second set of rails 125. The first set of rails 115 and the second set of rails 125 are complementary to one another such that the removable lid 120 can be slidably received by the holder 110, via engagement of the first pair of rails 115 with the second pair of rails 125. The direction of sliding engagement is indicated by the arrow in figure 2B. That is, the removable lid 120 is slid towards the back wall 113 of the holder 110 from the front opening of the holder 110.

As shown more clearly in figure 2B, the first pair of rails 115 generally comprises a pair of overturned U-shaped grooves formed by the side walls 112 being bent back on themselves at an uppermost edge. The overturned U-shaped grooves prevent movement of the second pair of rails 125 in an upwards direction. The second pair of rails 125 generally comprises a pair of protrusions which are formed by folding side edges of the periphery perpendicular to the plane of the removable lid 120. When received by the holder 110, the removable lid 120 is effectively sandwiched between the overturned U-shaped grooves of the first pair of rails 115 and the upper surface of the adjacent filter 202 such that an interference fit is produced between the first pair of rails 115 and the second pair of rails 125, which holds the removable lid 120 in place.

The removable lid 120 comprises a pair of handle members 121 located on adjacent sides of the removable lid 120 perpendicular to the second pair of rails 125. The pair of handle members 121 are therefore located on sides of the removable lid 120 which will be adjacent to the front opening and the back wall 113 of the holder 110. The pair of handle members 121 may facilitate insertion/removal of the removable lid 120 into/from the holder 110. As shown in figures 2A and 2B the removable holder 120 is symmetrical about its lengthwise direction, and accordingly can be inserted into the holder 120 in multiple orientations. This may further facilitate ease of insertion/removal of the removable lid 120 into/from the holder 110.

Figure 4 shows a cross-sectional side view of the filter frame 100 comprising the plurality of filter cells 201, 202 received in the cavity. The removable lid 120 is shown received by the holder 110, such that the plurality of filter cells 201, 202 are secured in the cavity. The removable lid 120 comprises a plurality of biasing elements 130, which in the present embodiment are a plurality of resiliently biased spring members, or more specifically are a plurality of C-shaped springs.

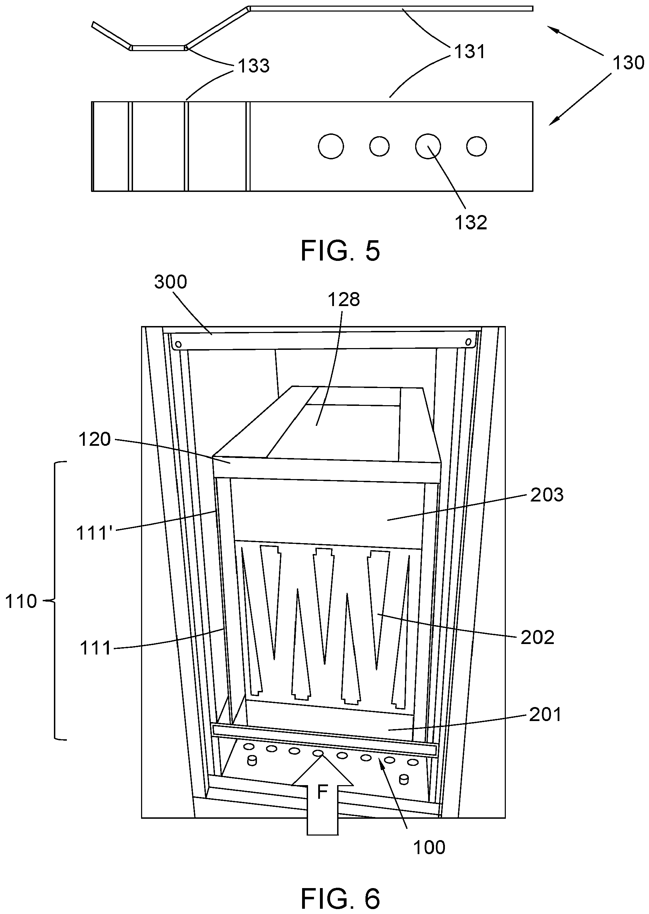

The C-shaped spring is shown in further detail figure 5, in both a side view and a plan view. The C-shaped spring 130 comprises a plurality of fastening holes 132, which one or more of may receive a suitable fastening such as a bolt, screw or rivet, to fasten the C-shaped spring to the underside of the removable lid 120. A spring portion 133 is located at a free end distal to the fastening holes 132. The spring portion 133 comprises a curved profile.

As shown in figure 4, each biasing element 130 is attached to an underside of the removable lid 120 and is arranged such that a spring portion 133 of the biasing element 130 contacts the upper surface of the filter cell 202 adjacent to the removable lid 120. Contact with the upper surface of the filter cell 202 deforms the spring portion 133 such that a spring force is generated by the biasing element 130, which in turn urges the plurality of filter cells 201, 202 together within the cavity. The provision of the plurality of biasing elements 130 hence assists the removable lid 120 in securing the plurality of filter cells 201, 202 within the cavity. Further, by urging the plurality of filter cells 201, 202 within the cavity an airtightness of the filter frame 100 may be improved. That is, the plurality of filter cells 201, 202 may be tightly held together due to the urging force provided by the plurality of biasing elements 130 such that no air gaps are present within the air passageway partially defined through the plurality of filter cells 201, 202 and the air inlet, which may otherwise result in untreated air being able to flow through the filter frame 100.

The direction of the urging force is parallel and opposite to an airflow direction through the air passageway defined partially through the plurality of filter cells 201, 202. Accordingly air currents through the filter frame 100 which, in use, could disturb or move the plurality of filter cells 201, 202 within the cavity are cancelled out or minimised. In other words, the biasing elements 130 are arranged to urge the plurality of filter cells 201, 202 together in a direction opposite to a direction of airflow through the plurality of filter cells 201, 202 when in use.

The plurality of biasing elements 130 are evenly distributed around the underside of the periphery of the removable lid 120. Evenly distributing the biasing elements 130 may result in an even distribution of force across the upper surface of the adjacent filter 202 (i.e. around the upper surface of the filter cell frame 202a), such that the resulting direction of the urging force is normal to the surface of the removable lid 120. This may further improve air tightness within the filter frame 100.

As shown in figure 4, the biasing elements 130 are located one in each corner of the underside of the removable lid 120, with biasing elements 130 further located evenly between each corner biasing element 130. However, in various embodiments other numbers of biasing elements 130 and distributions of the biasing elements 130 are contemplated.

Each of the spring portions 133 of the biasing elements 130 is also arranged such that the spring portion 133 guides the biasing element 130 into engagement with the upper surface of the adjacent filter cell 202. That is, the curved or rounded profile of the spring portion 133 provides a smooth contact between the upper surface of the adjacent filter cell 202 and the biasing elements 130. This may facilitate insertion of the removable lid 120 into the holder 110, and also prevent possible damage to the upper surface of the adjacent filter cell 202. Further, as the curved profile of the spring portions 133 is symmetrical, smooth contact between the biasing elements 130 and the upper surface of the adjacent filter cell 202 is provided regardless of the orientation of the removable lid 120 as it is inserted into the holder 110.

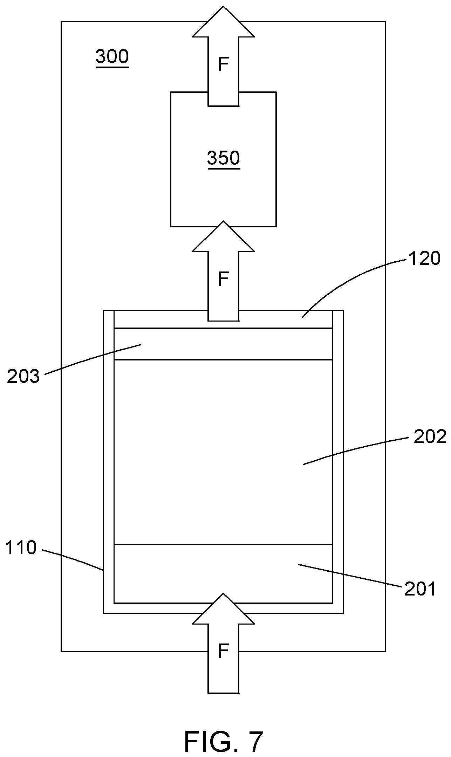

Figure 6 shows a perspective cross-sectional view of the filter frame 100 housed in an air handling unit 300. As shown schematically in figure 7, a pump 350 can be located in flow communication with the air outlet 128 of the filter frame 100, also housed within the air handling unit 300. The pump 350 is hence located downstream of the filter frame 100 such that the pump draws air through the filter frame 100. A direction of airflow through the filter frame 100 is indicated by the arrows F.

The filter frame 100 is shown comprising three filter cells 201, 202, 203 received within the cavity of the holder 110 however, rather than two filter cells 201, 202. Whilst three filter cells 201, 202, 203 are received within the cavity, the operation of the removable lid 120 and the mechanisms by which the removable lid 120 secures the plurality of filter cells 201, 202, 203 are identical to those described above in respect of the arrangement where two filter cells 201, 202 are received in the cavity.

To accommodate the third filter cell 203, the filter frame 100 is adjusted from a first position in which the cavity has a first volume (as in figures 2A, 2B and 3) to a second position in which the cavity has a second volume (as in figure 6). The second volume is greater than the first volume.

In the present embodiment the holder 110 comprises a first portion and a second portion. The first portion comprises the base 111, the side walls 112 and the back wall 113. The second portion comprises a pair of side walls 112' and a back wall 113' (not visible). The second portion is nested with the first portion, and is slidable with respect to the first portion such that an overall height of the filter frame can be adjusted. That is, the second portion telescopically extends with respect to the first portion. The first portion comprises a plurality of first fastening points to which a secondary fastening point of the second portion can be mated. In the present embodiment the plurality of first fastening points and the second fastening point each comprise a hole through which a threaded member can be received, and a fastener tightened on to, which fastens the holder 110 at the desired height and hence the filter frame 100 in the desired position. In various embodiments, alternative configurations for the plurality of first fastening points and the second fastening point are contemplated.

It will be appreciated that in each of the first position and the second position, the cross-sectional area of the filter frame 100 remains unchanged. However a height of the holder 110 (and hence a height of the filter frame 100) is increased when the filter frame 100 is adjusted from the first position to the second position. Accordingly the removable lid 120, which is received at the top opening of the holder 110, is capable of being received at a multiplicity of heights or positions with respect to the base 111 of the holder 110.

Whilst the filter frame 100 has been discussed herein in a preferred orientation where the base 111 of the holder 110 is located at a bottommost part of the filter frame 100 and the removable lid 120 is located at an uppermost part of the filter frame 100, it will be readily appreciated that the filter frame 100 is also capable of being used in alternative orientations. For example, the back wall 113 of the holder 110 may be located at the bottommost part of the filter frame 100 when in use, with the front opening located at the uppermost part of the filter frame 100. In another example, a side wall 112 of the holder 110 is located at the bottommost part of the filter frame 100 when in use, with the opposing side wall 112 located at the uppermost part of the filter frame 100.

In various embodiments, the first pair of rails 115 may comprise a pair of C-shaped brackets and the second pair of rails 125 may comprise a pair of complementary poles or rods configured to be received by the pair of C-shaped brackets. Other rail configurations are also contemplated in various embodiments.

In various embodiments, the removable lid 120 is connected to the holder 110 via a hinged connection, preferably at the back wall 113 of the holder 110, in place of the sliding rails 115, 125. In various embodiments the removable lid further comprises a pair of spring-loaded clips or other suitable, hand-releasable, fastenings which are arranged to maintain the hinged connection in a closed position when the plurality of filter cells 201, 202; 201, 202, 203 are located in the cavity. The hand-releasable fastenings are located partially on each of the removable lid 120 and the side walls 112 of the holder 110, and are preferably located distally to the hinged connection.

In various embodiments, each resiliently biased spring member 130 is formed integral with the removable lid 120, rather than being subsequently attached to the underside of the removable lid 120. Each integrally formed resiliently biased spring member 130 may hence depend from the underside of the removable lid 120 via an integrally formed hinge joint. The integrally formed resiliently biased spring member 130 may be formed for example by laser cutting, or appropriately machining, the resiliently biased spring members 130 from material of the periphery of the removable lid 120.

## Claims

1. A filter frame (100) for an air handling unit (300), the filter frame (100) comprising:
a holder (110) defining a cavity configured to receive a plurality of filter cells (201, 202; 201, 202, 203); and
a removable lid (120) configured to secure the plurality of filter cells (201, 202; 201, 202, 203) in the cavity.

2. A filter frame (100) as claimed in claim 1, wherein the filter frame (100) comprises a biasing element (130) configured to urge the plurality of filter cells (201, 202; 201, 202, 203) together within the cavity.

3. A filter frame (100) as claimed in claim 2, wherein the biasing element is a resiliently biased spring member (130).

4. A filter frame (100) as claimed in claim 2 or 3, wherein the removable lid (120) comprises a plurality of biasing elements (130) distributed around a periphery of the removable lid (120).

5. A filter frame (100) as claimed in any preceding claim, wherein the holder (110) is configured to receive the removable lid (120) at a plurality of positions;
wherein a volume of the cavity is defined by the position in which the removable lid (120) is received.

6. A filter frame (100) as claimed in any preceding claim, wherein the removable lid (120) is configured to be slidably received by the holder (110).

7. A filter frame (100) as claimed in claim 6, wherein the holder (110) comprises a first pair of rails (115);
wherein the removable lid (120) comprises a second pair of rails (125); and
wherein the holder (110) is configured to receive the removable lid (120) by sliding engagement between the first pair of rails (115) and the second pair of rails (125).

8. A filter frame (100) as claimed in claim 7, wherein a height of the first pair of rails (115) relative to a base (111) of the holder (110) is adjustable from a first height to a second height.

9. A filter frame (100) as claimed in any preceding claim, wherein the holder (110) comprises a U-shaped body (111, 112, 113).

10. A filter frame (100) as claimed in any preceding claim, wherein the holder (110) comprises an opening configured to define an air inlet or an air outlet; and
wherein the removable lid (120) comprises an opening (128) configured to define the other of the air outlet or air inlet.

11. A filter frame (100) as claimed in any preceding claim, the filter frame (100) comprising a plurality of filter cells (201, 202; 201, 202, 203) located in the cavity of the filter frame (100).

12. A filter frame (100) as claimed in claim 11, wherein each filter cell (201, 202; 201, 202, 203) contacts one or more adjacent filter cells (201, 202; 201, 202, 203).

13. An air handling unit (300), the air handling unit (300) comprising:
a filter frame (100) as claimed in claim 11 or 12; and
an air pump (350) in flow communication with the filter frame (100) for pumping air through the plurality of filter cells (201, 202; 201, 202, 203).

14. A method of assembling a filter frame (100) for an air handling unit (300), the method comprising:
providing a filter frame (100) as claimed in any of claims 1 to 11;
providing a plurality of filter cells (201, 202; 201, 202, 203);
inserting the plurality of filter cells (201, 202; 201, 202, 203) into the cavity; and
mounting the removable lid (120) to the holder (110), such that the plurality of filter cells (201, 202; 201, 202, 203) are held securely within the cavity.

15. A method as claimed in claim 14, wherein the step of mounting the removable lid (120) comprises:
sliding the removable lid (120) into the holder (110); and
urging the plurality of filter cells (201, 202; 201, 202, 203) together within the cavity using one or more biasing elements (130) of the filter frame (100).
